# EUROPÄISCHE PATENTSCHRIFT

(11) **EP 3 180 540 B1**
(45) Veröffentlichungstag und Bekanntmachung des Hinweises auf die Patenterteilung: **19.02.2020**
(21) Anmeldenummer: 15770451.1
(22) Anmeldetag: 10.08.2015
(51) Int. Cl.: F16F 1/373

(54) **ELASTOMERE TRAGFEDER**
ELASTOMERIC BEARING SPRING
RESSORT DE SUSPENSION ÉLASTOMÈRE

(30) Priorität: 13.08.2014 DE 102014216068
(43) Veröffentlichungstag der Anmeldung: 21.06.2017
(73) Patentinhaber: BOGE Elastmetall GmbH, 49401 Damme (DE)
(72) Erfinder: SCHARF, Jörg, 65558 Eppenrod (DE); JACKE, Maren, 38442 Wolfsburg (DE); MARTIN, Jens, 29399 Wahrenholz (DE)
(74) Vertreter: Bossmeyer, Jörg Peter
(86) Internationale Anmeldenummer: PCT/EP2015/068352
(87) Internationale Veröffentlichungsnummer: WO 2016/023860

(56) Entgegenhaltungen:
- WO-A1-2011/062587
- DE-A1-102010 043 165
- US-A- 4 541 978
- US-A- 5 123 625

## Beschreibung

Die Erfindung betrifft eine elastomere Tragfeder zur schwingungsdämpfenden Lagerung von Kraftfahrzeugbauteilen nach dem Oberbegriff des Anspruchs 1. Derartige elastomere Tragfedern sind bekannt und finden verbreitet Einsatz, wobei das unter Zuhilfenahme der elastomeren Tragfeder gebildete Lager dabei sowohl zur Lagerung von Motoren wie von Getrieben oder auch nur Teilen derselben geeignet ist und allgemein daher als ein Aggregatlager anzusehen ist. Außerdem betrifft die Erfindung auch ein Verfahren zur Herstellung einer solchen Tragfeder, eine dem Herstellverfahren zugeordnete Vorrichtung sowie die Verwendung der Tragfeder an sich.

Die erwähnten Tragfedern kennt man dabei insbesondere als Gummifedern, die häufig als Block in Vollmaterial ausgebildet, also vulkanisiert sind, wie es beispielsweise in der DE 10 2010 043 165 A1 gezeigt ist. Dabei erweist es sich als nachteilig, dass bei der Ausbildung der elastomeren Tragfeder in Blockform, also aus Gummivollmaterial aufgrund der schlechten Wärmeleitfähigkeit des Elastomeres sehr lange Heizzeiten benötigt werden, um die betreffende Blockfeder vollständig auszuvulkanisieren. Um dieses Problem zu beseitigen, wurde bereits vorgeschlagen, Löcher in die Blockfedern einzubringen. Diese gelochten Blockfedern haben den Vorteil einer verkürzten Heizdauer, für diese Verkürzung müssen jedoch dann andere Nachteile in Kauf genommen werden. So bedarf es zusätzlichen Bauraumes und/oder einer höheren Shore-Härte, um die gleiche Steifigkeit zu erzielen; aufgrund der großen verformbaren Oberfläche kommt es zu einer höheren Setzung, so dass man eine Tragfeder mit schlechterer Dämpfungscharakteristik erhält, da ein dämpfender Effekt erst nach Schließen der Hohlräume eintritt. Außerdem sieht man sich einer unerwünscht geringen Schubsteifigkeit der Blockfeder gegenüber.

Aus US 5,123,625 A ist eine elastomere Tragfeder mit den Merkmalen des Oberbegriffs des Anspruchs 1 bekannt. Weiter sind aus US 4,541,978 A eine Vorrichtung zum Herstellen einer elastomeren Tragfeder mit den Merkmalen des Oberbegriffs des Anspruchs 8 und ein Verfahren zum Herstellen einer elastomeren Tragfeder bekannt.

Es besteht daher die Aufgabe, eine elastomere Tragfeder zur Verfügung zu stellen, die die vorgenannten Nachteile vermeidet und trotzdem eine reduzierte Heizdauer des Tragfederblocks ermöglicht.

Diese Aufgabe wird gelöst durch eine elastomere Tragfeder der eingangs genannten Art, die die Merkmale des Kennzeichens des Anspruchs 1 aufweist. Die erfindungsgemäße Tragfeder weist zumindest einen Bereich aus einem Elastomervollmaterial auf, welcher in wenigstens zwei Segmente unterteilt ist.

Auf diese Art werden an dem Körper der elastomeren Tragfeder weitere Flächen gebildet, über welche ein Wärmeeintrag als Beitrag zur Vulkanisation stattfinden kann, der insbesondere die notwendige Heizdauer verringert. Die Lösung des gestellten Problems stellt sich also derart dar, dass die Blockfeder aus Vollmaterial in kleinere Segmente geteilt bzw. unterteilt wird und anschließend so ausvulkanisiert wird. Hierbei entstehen zusätzliche Flächen an dem Federblock, über welche Wärme in den Block eingetragen werden kann, außerdem wird die Dicke der bei der Vulkanisation zu durchdringenden Wände geringer. Die Heizdauer wird hierdurch deutlich gesenkt, wodurch eine wirtschaftlichere Herstellung der Tragfedern ermöglicht wird. Um aus den Segmenten wieder die mechanische Funktion der Vollblockfeder zu erhalten, können die Segmente bereits bei der Montage aneinandergedrückt werden, so dass in Gebrauchsstellung der Tragfeder deren gewollte Kontur erhalten bleibt und geometrisch wieder die Vollblockfeder entsteht. Bei Belastung der elastomeren Tragfeder liegen die Trennflächen zumindest im Wesentlichen vollflächig und spaltfrei aneinander an und stützen sich gegeneinander ab. Die Trennfläche, die innerhalb der Vollblockfeder verbleibt, hat dann praktisch keinen Einfluss auf deren mechanische Funktion.
Zur Vulkanisation wird dabei eine Mischung aus Rohkautschuk, Additiven und Füllstoffen unter Druck erhitzt, wobei die Kautschukmoleküle vernetzt werden und dadurch der zuvor plastische Kautschuk in ein dauerelastisches Gummimaterial überführt wird, das auf mechanische Beanspruchung elastisch reagiert, also in seine Ausgangslage zurückfedert.
Der in Segmente unterteilte Bereich kann sich beispielsweise über einen Teil der Höhe der elastomeren Tragfeder erstrecken, aber auch deren gesamte Höhe einnehmen, überdies sind auch andere Unterteilungsrichtungen denkbar. Auch die Zahl der Segmente kann höher sein als zwei, beispielsweise in Vielfachen von zwei, also vier, acht oder mehr.

Denkbar ist an dieser Stelle auch, dass mehrere Profilabschnitte zu einer elastomeren Tragfeder zusammengefasst werden können, das heißt, es liegt zum Beispiel zunächst eine Anzahl extrudierter, fertig ausvulkanisierter Profilstränge vor, die anschließend wieder einen Block bilden.

Bei einer vorteilhaften Ausführung der elastomeren Tragfeder kann es vorgesehen sein, dass die Unterteilung des zumindest einen Bereichs entlang einer Belastungsrichtung der Tragfeder in Gebrauchsstellung vorgesehen ist. Hierbei wird bevorzugt die Hauptbelastungsrichtung der Tragfeder gewählt werden, entlang welcher die Kräfte an der Tragfeder auftreten, so dass auf die Flächen zwischen den Segmenten nur geringe oder im besten Fall gar keine Kräfte wirken. Eine Krafteinleitung senkrecht zur Unterteilung der Segmente wäre dagegen eher ungünstig, weil sich die Segmente der Tragfeder dann gegeneinander verschieben könnten und eine geringere "Federfläche" der Tragfeder wirksam wäre.
Denkbar ist es auch, dass an der Tragfeder mehrere voneinander getrennte Bereiche, die jeweils in Segmente unterteilt sind, vorgesehen sind.

Bei der erfindungsgemäßen elastomeren Tragfeder weisen je zwei benachbarte Segmente formkorrespondierende Kontaktflächen auf, die in Gebrauchsstellung der elastomeren Tragfeder Innenflächen derselben bilden und flächig spaltfrei aneinander anliegen. Gebrauchsstellung meint dabei den montierten Zustand der Blockfeder, der in der Regel bereits durch eine Last beaufschlagt ist und hinsichtlich der zu erzielenden Dämpfung eine Nullstellung bildet. In dieser Gebrauchsstellung bildet die elastomere Tragfeder dann also wieder quasi einen Block und die Kontaktflächen liegen im Wesentlichen vollflächig aneinander an, insbesondere bilden sie dabei keine Spalte. Durch spaltfreies Anliegen der Segmente im Bereich der Trennung heben sich die Querkräfte gegeneinander auf, so dass es nicht zu einem Ausbauchen im Bereich der Trennung kommt.

Erfindungsgemäß sind bei der elastomeren Tragfeder die Kontaktflächen benachbarter Segmente in Gebrauchsstellung der Tragfeder parallel zu einer Belastungsrichtung ausgerichtet. Die erwähnte Parallelität zur Belastungsrichtung schließt hierbei herstellungsbedingt notwendige Formschrägen mit ein. So können die Segmente der elastomeren Tragfeder dabei beispielsweise säulenförmig mit gleichmäßiger Querschnittsfläche über deren Erstreckung in Belastungsrichtung ausgebildet sein, oder aber auch nur mit Kontaktflächen parallel zur Belastungsrichtung versehen sein, während dies etwa für Außenflächen der Segmente jedenfalls nicht zwingend zutreffen muss, so dass die Kontur einzelner Segmente bzw. damit auch des Tragfederblocks flexibel gestaltet werden kann.

In einer zweckmäßigen Weiterbildung der elastomeren Tragfedern, die eine vereinfachte Herstellung derselben ermöglicht, sind die Kontaktflächen zweier benachbarter Segmente senkrecht zu der Belastungsrichtung hinterschneidungsfrei ausgebildet. Auf diese Weise werden frei an dem jeweiligen Segment vorstehende Elemente vermieden, die eine Entfernung des Segments bzw. der Tragfeder als Ganzes aus der Herstellungsform verhindern könnten. Erfindungsgemäß sind die Kontaktflächen zwischen den Segmenten eben ausgebildet, wobei ebene Kontaktflächen insbesondere insoweit als vorteilhaft anzusehen sind, als sie auch nach Trennung durch Überbeanspruchung wieder zusammen finden.

Hinsichtlich der Gestaltung der Eigenschaften der elastomeren Tragfedern bieten sich bei einer Segmentierung des Federblocks eine Reihe von Möglichkeiten. So können vorteilhafte Ausführungen elastomerer Tragfedern werkstoffhomogen und/oder werkstoffheterogen ausgebildete Segmente aufweisen. Dabei können etwa säulenförmige Segmente auch eine gleiche oder eine unterschiedliche Höhe haben und können zur symmetrischen Spannungsverteilung in Form und Größe gleiche Querschnittsflächen aufweisen, wobei sie aus dem gleichen Werkstoff gebildet sein können, der sowohl über das jeweilige Segment homogen verteilt sein kann also auch segmentübergreifend.
Andererseits kann eine Tragfeder aus mehreren Profilsträngen gebildet sein und bei dieser kann etwa ein höher belasteter Strang aus einem höher belastbaren Werkstoff hergestellt sein, so dass die Tragfeder insgesamt als werkstoffheterogen anzusehen ist. Denkbar ist hierbei auch, verschleißfestere Bereiche vorzusehen, bei denen in Belastungsrichtung zunächst ein weicherer, dann ein härterer Werkstoff zum Einsatz kommt, wodurch auch einzelne Segmente in sich als heterogen auszulegen wären. Mit der skizzierten belastungs- und kostenabhängigen Auswahl von Elastomerqualitäten kann die Segmentierung auch eine erhöhte Flexibilität dahingehend bereitstellen, auf unterschiedliche geforderte Belastungsprofile von Tragfedern eingehen zu können.

Bei der erfindungsgemäßen elastomeren Tragfeder, die hinsichtlich Logistik und Handling Vorteile bietet, ist eine Mehrzahl von Segmenten an ihrem einer Last in Gebrauchsstellung der Tragfeder zugewandten Ende in ihrem stirnseitigen Bereich über wenigstens ein Verbindungselement miteinander verbunden. Dieses Verbindungselement ist als Verbindungssteg ausgebildet. Es können auch mehrere Verbindungselemente die Segmente verbinden.

Erfindungsgemäß ist das wenigstens eine Verbindungselement mit den durch dieses verbundenen Enden der Segmente einstückig ausgebildet. Wird das Verbindungselement bei der Herstellung zusammen mit seinen Segmenten vulkanisiert, kann es bei Anordnen in der Gebrauchsstellung, wenn die Segmente nebeneinander angeordnet werden, zu einer geringfügigen Einschränkung der zuvor beschriebenen, flächigen spaltfreien Anlage der Kontaktflächen kommen, da herstellungsbedingt eine Biegerundung entstehen kann. Dieser geringfügige Hohlraum stellt aber schon deshalb keine funktionale Einschränkung dar, da er unter Belastung weitgehend verschwindet.

Eine andere Tragfeder weist bei wenigstens einem seiner Segmente wenigstens eine Aufnahme auf, in welcher ein zu der Aufnahme formkomplementäres Teilsegment aufnehmbar oder aufgenommen ist. Das Teilsegment bildet also eine Art Stopfen und ist spaltfrei in der Aufnahme angeordnet. Dieses kann aus einem extrudierten Profilabschnitt gebildet sein, welcher mit einer Profilschere oder mittels eines Wasserstrahlschneiders von einem Profilstrang abgetrennt wird. Hinsichtlich seines Querschnitts kann das Teilsegment wiederum variieren, beispielsweise ein mehreckigen, insbesondere viereckigen oder runden insbesondere kreisrunden Querschnitt aufweisen. Der Querschnitt des Teilsegments kann sich dabei etwa auch an dem Querschnitt des Segments selbst orientieren.

Das vorstehend erwähnte Problem wird auch gelöst durch ein Verfahren nach Anspruch 6. Bei diesem Verfahren zur Herstellung einer elastomeren Tragfeder wie zuvor beschrieben erfolgt während einer Vulkanisation ein Wärmeeintrag in Elastomermaterial der elastomeren Tragfeder über wenigstens eine an deren Außenumfang befindliche Einleitungsfläche, wobei während der Vulkanisation zur Verkürzung einer Vulkanisationsdauer ein zusätzlicher Wärmeeintrag über wenigstens eine Kontaktfläche der elastomeren Tragfeder erfolgt, welche in deren Gebrauchsstellung innenliegend angeordnet ist. Auch auf diese Weise werden die zuvor genannten Nachteile vermieden und es wird eine reduzierte Heizdauer des Tragfederblocks ermöglicht.

Vorteilhaft, weil schnell und gut beherrschbar in der Herstellung, wird die elastomere Tragfeder durch ein Press-, ein Spritzpress- oder ein Spritzgussverfahren hergestellt, bei welchem die Vulkanisation der elastomeren Tragfeder unter Druck und Wärmezufuhr in der Form erfolgt.

Ebenso wird eine Lösung des Problems durch eine Vorrichtung nach Anspruch 8 zur Verfügung gestellt. Diese Vorrichtung zur Herstellung einer elastomeren Tragfeder nach einem der Ansprüche 1 bis 5 und/oder zur Durchführung des Verfahrens nach den Ansprüchen 6 oder 7 weist zumindest eine Heizfläche zur Wärmeeinleitung in die elastomere Tragfeder über Einleitungsflächen an deren Außenumfang auf. Die Vorrichtung zur Herstellung weist dabei zur Verkürzung einer Vulkanisationszeit wenigstens eine zusätzliche Heizfläche auf, welche einen Wärmeeintrag über wenigstens eine zugeordnete Kontaktfläche der elastomeren Tragfeder gestattet, welche in deren Gebrauchsstellung innenliegend angeordnet ist. Hierdurch wird die Vulkanisationsdauer verkürzt.

Die zuvor beschriebene elastomere Tragfeder kann zweckmäßigerweise in einem Aggregatlager eines Kraftfahrzeuges Verwendung finden. Bei dieser Verwendung kann die elastomere Tragfeder bevorzugt in zumindest einem muldenförmigen Bereich des Aggregatlagers formschlüssig aufnehmbar oder aufgenommen sein. Der muldenförmige Bereich kann hierbei vorteilhaft zumindest ein Stirnende der Tragfeder formschlüssig aufnehmen, bevorzugt sind beide stirnseitigen Enden jeweils in einer passenden Aufnahme angeordnet, was zu einer flächigen Anlage der Kontaktflächen der Segmente der Tragfeder führt.

Die Erfindung wird nachstehend anhand von Ausführungsbeispielen in der Zeichnung näher erläutert. In teilweise schematisierter Darstellung zeigen hierbei die
- Fig. 1: eine stirnseitige Ansicht eines ersten Ausführungsbeispiels einer elastomeren Tragfeder von unten
- Fig. 2: eine geschnittene Seitenansicht der Tragfeder aus der Fig. 1 entlang der dortigen Schnittlinie II-II
- Fig. 3: eine perspektivische Seitenansicht der Tragfeder aus den Fig. 1 und 2
- Fig. 4: eine ebene Seitenansicht der Tragfeder aus den Fig. 1 bis 3
- Fig. 5, 6: zwei andere elastomere Tragfedern mit in Aufnahmen angeordneten Teilsegmenten mit eckigem (Fig. 5) und rundem (Fig. 6) Querschnitt.
- Fig. 7, 8: perspektivische Seitenansichten zweier Ausführungsbeispiele einer Herstellungsvorrichtung für eine elastomere Tragfeder mit (Fig. 7) und ohne (Fig. 8) daran angeordneter Tragfeder.
- Fig. 9: eine perspektivische, teilgeschnittene Seitenansicht schräg von oben eines Ausführungsbeispiels, bei dem die elastomere Tragfeder in einem Aggregatlager eines Kraftfahrzeugs Verwendung findet;
- Fig. 10: eine perspektivische Seitenansicht eines weiteren Ausführungsbeispiels mit mehrfacher Segmentierung;

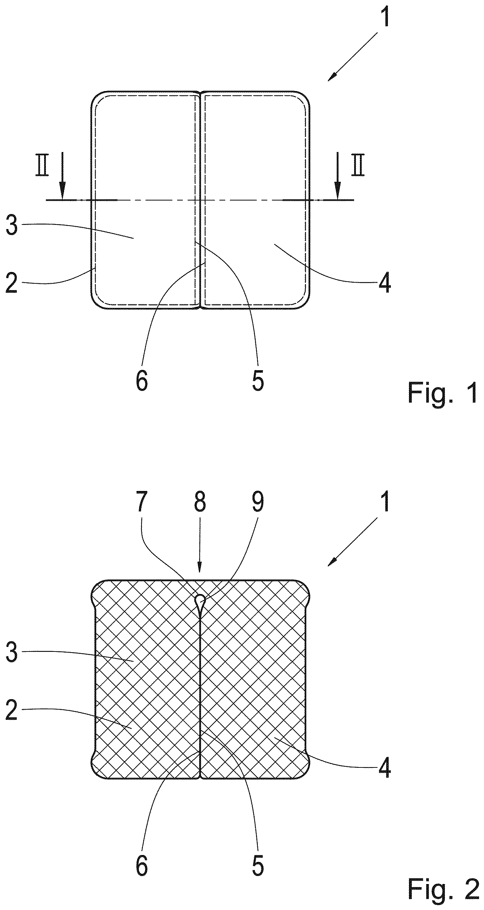

In den Fig. 1 bis 4 erkennt man eine im Ganzen mit 1 bezeichnete elastomere Tragfeder, die einen Federblock 2 bildet Die elastomere Tragfeder ist zur schwingungsdämpfenden Lagerung von Kraftfahrzeugbauteilen vorgesehen und weist einen Bereich aus einem Elastomervollmaterial auf, welcher in wenigstens zwei Segmente 3, 4 unterteilt ist, nämlich in den Fig. 1 und 2 das für den Betrachter linke Segment 3 und das rechte Segment 4. Der Bereich aus Elastomervollmaterial erstreckt sich dabei fast über die gesamte Höhe der Elastomerfeder, mit Ausnahme des Verbindungselements 7, das die beiden Segmente 3, 4 an ihrer oberen Stirnseite übergreift und durch gemeinsame Vulkanisation einstückig mit diesen verbunden ist.

Die Belastungsrichtung der Tragfeder 1 verläuft beispielsweise in der Fig.2 für den Betrachter von oben nach unten, so dass die Unterteilung des zumindest einen Bereichs entlang eben dieser Belastungsrichtung der Tragfeder 1 in Gebrauchsstellung vorgesehen ist.

Zu erkennen ist in den Fig. 1 bis 4 weiter, dass an der elastomeren Tragfeder 1 die beiden benachbarten Segmente 3, 4 formkorrespondierende Kontaktflächen 5, 6 aufweisen, die in Gebrauchsstellung der elastomeren Tragfeder 7 Innenflächen derselben bilden und flächig spaltfrei aneinander anliegen. Dabei sind die Kontaktflächen 5, 6 der beiden benachbarten Segmente in Gebrauchsstellung der Tragfeder 1 parallel zu der vorher erwähnten Belastungsrichtung ausgerichtet. Außerdem erkennt man, dass die Kontaktflächen 5, 6 der beiden benachbarten Segmente 2, 3 senkrecht zu der Belastungsrichtung hinterschneidungsfrei ausgebildet sind.

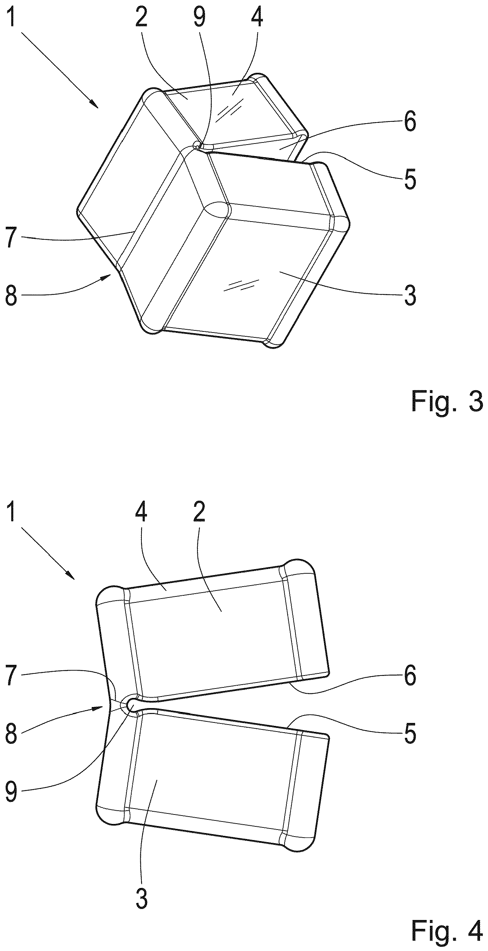

Den Fig. 3 und 4 ist zu entnehmen, dass die Segmente 3, 4 entlang einer durch den Verbindungssteg 7 gebildeten Knicklinie 8 aufeinander zu in ihre Gebrauchsstellung verschwenkt werden können, so dass die Kontaktflächen 5, 6 spaltfrei aneinander anliegen und eine Biegerundung 9 entsteht.

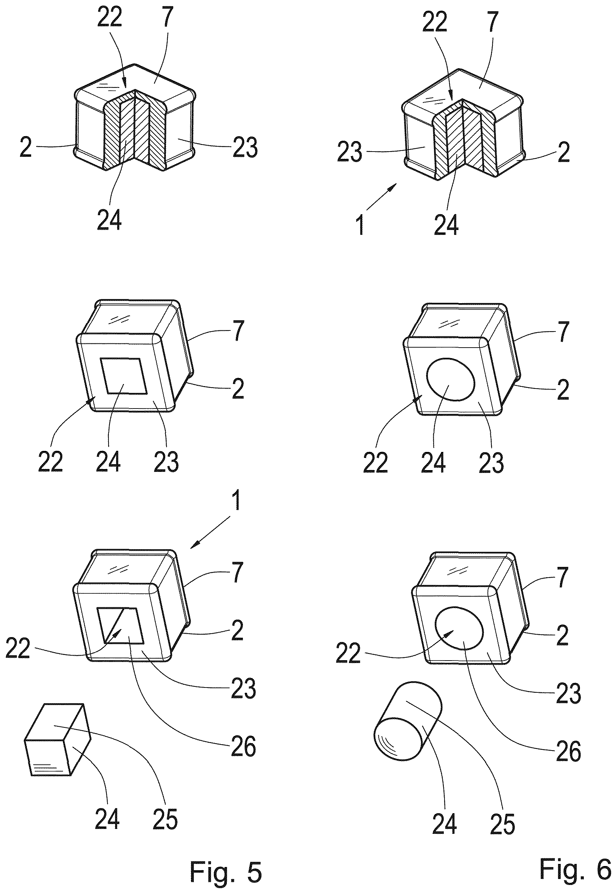

In den Fig. 5 und 6 sind zwei Darstellungen von anderen elastomeren Tragfedern 1 dargestellt, bei denen die Unterteilung ebenfalls derart vorgesehen ist, dass Kontaktflächen von Segmenten entlang der Belastungsrichtung einander gegenüber liegen. Allerdings bildet hierbei ein Federblock 2 ein Segment, das eine Aufnahme aufweist, in welcher ein zu der Aufnahme formkomplementäres Teilsegment aufnehmbar oder aufgenommen ist. Die Teilsegmente der Fig. 5 und 6 haben einen quadratischen bzw. kreisrunden Querschnitt. Stirnseitig der Last zugewandt überdeckt das Verbindungselement 7 in Gebrauchsstellung die Stirnseite des Segments 23 sowie des Teilsegments 24, während es nur mit ersterem einstückig verbunden ist.
In beiden Darstellungen der Fig. 5 und Fig. 6 erkennt man dabei von oben nach unten den zusammengesetzten Federblock 2 in Gebrauchsstellung, dann in Ansicht von unten und schließlich in seinen beiden Einzelteilen, also im Wesentlichen den Segmenten 23 und 24, wobei sich die formkomplementäre Ausnehmung 22 am besten aus der untersten Darstellung ergibt. Aufgrund geringerer Beanspruchung im unteren Teil der Tragfeder kann etwa das Teilsegment 24 aus einem weniger beanspruchbaren, günstigeren Werkstoff ausgebildet sein.
Die Außenfläche des Teilsegments 24 und die Innenfläche der Ausnehmung 22 bilden Kontaktflächen 25, 26 der Segmente 23, 24.

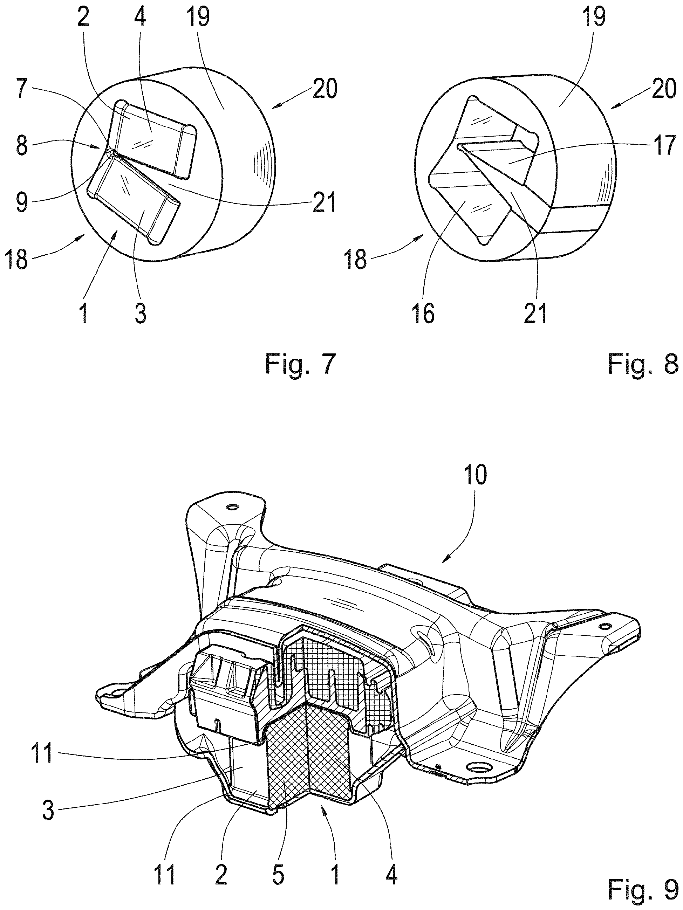

In den Fig. 7 und 8 erkennt man eine Herstellungsvorrichtung 20 mit einer Form 19 mit kreisrundem Querschnitt, die ein Formnest 18 aufweist, in welcher die beiden zu dem Federblock 2 der Fig. 1 bis 4 zusammenführbaren Segmente 3, 4 gemeinsam in der Form 19 zusammen mit dem sie verbindenden Verbindungselement 7 vulkanisiert werden. Die hierfür erforderliche Wärme kann sowohl über Heizflächen 16 der Form, die Außenflächen des Federblocks 2 gegenüberliegen, eingebracht werden, als auch über einen im Querschnitt dreieckigen Kernbereich 21, dessen Seitenflächen zusätzliche Heizflächen 17 bilden. Dieser Kernbereich 21 greift vom Rand der Form 19 kommend, sich verjüngend in das Innere des Formnestes 18, wodurch die beiden Segmente 3, 4 in einer winkligen Stellung miteinander vulkanisiert werden, um nach Entnahme aus der Form in ihre Gebrauchsstellung mit einander gegenüberliegenden Kontaktflächen 5, 6 verschwenkt zu werden. In der Ausführung der Fig. 8 bildet der Kernbereich 21 ein von der Form trennbares Teil, das aus einem besonders gut wärmeleitfähigen Material, etwa aus Kupfer ausgebildet sein kann.

Die Fig. 9 zeigt eine Verwendung der elastomeren Tragfeder 1 als Bestandteil eines Aggregatlagers 10 eines nicht weiter dargestellten Kraftfahrzeugs. Dieses Aggregatlager hat dabei einen oberen und einen unteren muldenförmigen Bereich 11, in dem jeweils die stirnseitigen Enden der Tragfeder 1 mit ihren Segmenten 3, 4 formschlüssig aufgenommen sind.
Anhand der Unterteilung in die Segmente 3, 4 erkennt man in dem Teilschnitt der Fig. 9 die Kontaktfläche 5 der Tragfeder 1. Wie bereits zuvor ist auch hier die Belastungsrichtung in der Darstellung von oben nach unten, wobei der Tragarm 12 die entsprechende Last bildet, die die zu dämpfenden Schwingungen an die elastomere Tragfeder 1 vermittelt.

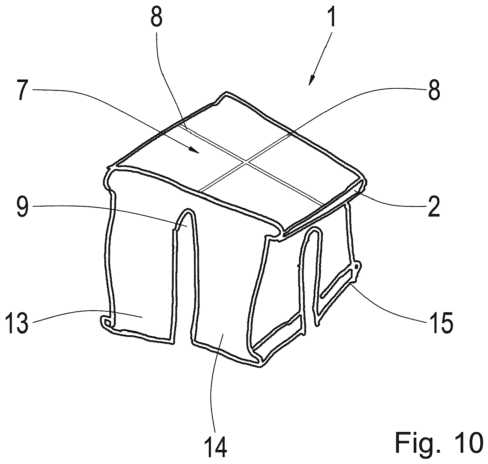

In der Fig. 10 ist schließlich ein Ausführungsbeispiel der elastomeren Tragfeder 1 mit mehrfacher Unterteilung gezeigt, bei dem die Segmente 13, 14, 15 zu erkennen sind, die gemeinsam mit einem dem Betrachter abgewandten, nicht erkennbaren Segment eine Tragfeder 1 mit vier Säulen viereckigen Querschnitts bilden. Derart weist jedes der Segmente 13, 14, 15 zwei Nachbarn auf, mit denen es Kontaktflächen hat, während es jeweils mit einem Eckbereich an denjenigen des diagonal benachbarten Segments 13, 14, 15 grenzt. Entsprechend sind an dem Federblock mehrere einander im rechten Winkel kreuzende Knicklinien 8 gebildet, an denen die Segmente in die Gebrauchsstellung zu einem Vollblock verschwenkbar sind.

Die vorstehend beschriebene Erfindung betrifft demnach eine elastomere Tragfeder 1 zur schwingungsdämpfenden Lagerung von Kraftfahrzeugbauteilen. Um bei guter Dämpfungscharakteristik die Tragfeder 1 in kürzerer Zeit vulkanisieren zu können, weist die Tragfeder 1 zumindest einen Bereich aus einem Elastomervollmaterial auf, welcher in wenigstens zwei Segmente 3, 4, 13, 14, 15, 23, 24, unterteilt ist. Außerdem betrifft die Erfindung ein Verfahren und eine Vorrichtung zur Herstellung der betreffenden Tragfeder 1 sowie deren Verwendung.

### Bezugszeichen

- 1: elastomere Tragfeder
- 2: Federblock
- 3: Segment
- 4: Segment
- 5: Kontaktfläche von 3
- 6: Kontaktfläche von 4
- 7: Verbindungselement
- 8: Knicklinie
- 9: Biegerundung
- 10: Aggregatlager
- 11: muldenförmige Bereiche von 10
- 12: Tragarm
- 13: Segment
- 14: Segment
- 15: Segment
- 16: Heizfläche
- 17: zusätzliche Heizfläche
- 18: Formnest
- 19: Form
- 20: Herstellungsvorrichtung
- 21: Kernbereich
- 22: formkomplementäre Ausnehmung
- 23: Segment
- 24: Teilsegment
- 25: Kontaktfläche
- 26: Kontaktfläche

## Patentansprüche

1. Elastomere Tragfeder (1) zur schwingungsdämpfenden Lagerung von Kraftfahrzeugbauteilen, wobei die elastomere Tragfeder (1) zumindest einen Bereich aus einem Elastomervollmaterial aufweist, welcher in wenigstens zwei Segmente (3, 4, 13, 14, 15, 23, 24) unterteilt ist, von denen eine Mehrzahl an ihrem einer Last in Gebrauchsstellung der Tragfeder (1) zugewandten Ende in ihrem stirnseitigen Bereich über wenigstens ein als Verbindungssteg ausgebildetes Verbindungselement (7) miteinander verbunden sind, welches mit den durch dieses verbundenen Enden der Segmente (3, 4, 13, 14, 15, 23, 24) einstückig ausgebildet ist, wobei je zwei benachbarte Segmente (3, 4, 13, 14, 15, 23, 24) formkorrespondierende Kontaktflächen (5, 6, 25, 26) aufweisen, die in Gebrauchsstellung der elastomeren Tragfeder (1) Innenflächen derselben bilden und flächig spaltfrei aneinander anliegen, und wobei die Kontaktflächen (5, 6, 25, 26) benachbarter Segmente (3, 4, 13, 14, 15, 23, 24) eben und in Gebrauchsstellung der Tragfeder (1) parallel zu einer Belastungsrichtung ausgerichtet sind, **dadurch gekennzeichnet, dass** die Segmente (3, 4) entlang einer durch den Verbindungssteg (7) gebildeten Knicklinie (8) aufeinander zu in ihre Gebrauchsstellung schwenkbar sind.

2. Elastomere Tragfeder nach Anspruch 1, **dadurch gekennzeichnet, dass** die Unterteilung des zumindest einen Bereichs entlang der Belastungsrichtung der Tragfeder (1) in Gebrauchsstellung vorgesehen ist.

3. Elastomere Tragfeder nach Anspruch 1 oder 2, **dadurch gekennzeichnet, dass** die Kontaktflächen (5, 6, 25, 26) zweier benachbarter Segmente (3, 4, 13, 14, 15, 23, 24) senkrecht zu der Belastungsrichtung hinterschneidungsfrei ausgebildet sind.

4. Elastomere Tragfeder nach einem der vorhergehenden Ansprüche, **dadurch gekennzeichnet, dass** die Segmente 3, 4, 13, 14, 15, 23, 24 werkstoffhomogen ausgebildet sind.

5. Elastomere Tragfeder nach einem der vorhergehenden Ansprüche, **dadurch gekennzeichnet, dass** die Segmente (3, 4, 13, 14, 15) säulenförmig mit gleichmäßiger Querschnittsfläche über deren Erstreckung in Belastungsrichtung ausgebildet sind, wobei die säulenförmigen Segmente (3, 4, 13, 14,15) zur symmetrischen Spannungsverteilung in Form und Größe gleiche Querschnittsflächen aufweisen.

6. Verfahren zur Herstellung einer elastomeren Tragfeder (1) nach einem der vorhergehenden Ansprüche, wobei während einer Vulkanisation ein Wärmeeintrag in Elastomermaterial der elastomeren Tragfeder (1) über wenigstens eine an deren Außenumfang befindliche Einleitungsfläche erfolgt, und wobei während der Vulkanisation zur Verkürzung einer Vulkanisationsdauer durch einen Kernbereich (21), dessen Seitenflächen zusätzliche Heizflächen (17) bilden, ein zusätzlicher Wärmeeintrag über wenigstens eine Kontaktfläche (5, 6, 25, 26) der elastomeren Tragfeder (1) erfolgt, welche in deren Gebrauchsstellung innenliegend angeordnet ist, wobei der Kernbereich (21) im Querschnitt dreieckig ist, sodass die beiden Segmente (3, 4) in einer winkligen Stellung miteinander vulkanisiert werden.

7. Verfahren nach Anspruch 6, wobei die Tragfeder (1) durch ein Press-, ein Spritzpress- oder ein Spritzgussverfahren hergestellt wird, bei welchem die Vulkanisation der elastomeren Tragfeder (1) unter Druck und Wärmezufuhr in einer Form (19) erfolgt.

8. Vorrichtung zur Herstellung einer elastomeren Tragfeder (1) nach einem der Ansprüche 1 bis 5 und/oder zur Durchführung des Verfahrens nach einem der Ansprüche 6 bis 7, wobei die Vorrichtung zumindest eine Heizfläche (16) zur Wärmeeinleitung in die elastomere Tragfeder (1) über Einleitungsflächen an deren Außenumfang aufweist, und wobei die Vorrichtung zur Verkürzung einer Vulkanisationszeit einen Kernbereich (21) aufweist, dessen Seitenflächen zusätzliche Heizflächen (17) bilden, welche einen Wärmeeintrag über wenigstens eine zugeordnete Kontaktfläche (5, 6, 25, 26) der elastomeren Tragfeder (1) gestatten, welche in deren Gebrauchsstellung innenliegend angeordnet ist, **dadurch gekennzeichnet, dass** der Kernbereich (21) im Querschnitt dreieckig ist, sodass die beiden Segmente (3, 4) in einer winkligen Stellung miteinander vulkanisierbar sind.

9. Verwendung einer elastomeren Tragfeder (1) nach einem der Ansprüche 1 bis 5 in einem Aggregatlager (10) eines Kraftfahrzeuges.

10. Verwendung einer elastomeren Tragfeder (1) nach Anspruch 9, **dadurch gekennzeichnet, dass** das Aggregatlager (10) zumindest einen muldenförmigen Bereich (11) aufweist, in welchem die elastomere Tragfeder (11) formschlüssig aufnehmbar oder aufgenommen ist.

## Claims

1. Elastomer suspension spring (1) for vibration-reducing mounting of motor vehicle components, wherein the elastomer suspension spring (1) has at least one region made from an elastomer full material which is divided into at least two segments (3, 4, 13, 14, 15, 23, 24) of which a plurality are connected together at their end facing a load in the position of use of the suspension spring (1) in their end-side region via at least one connection element (7) designed as a connection web which is designed in one piece with the ends of the segments (3, 4, 13, 14, 15, 23, 24) connected by said connection element, wherein each two adjacent segments (3, 4, 13, 14, 15, 23, 24) have contact surfaces (5, 6, 25, 26) corresponding in shape which, in the position of use of the elastomer suspension spring (1) form inner surfaces of the same and abut on one another extensively without gaps and wherein the contact surfaces (5, 6, 25, 26) of adjacent segments (3, 4, 13, 14, 15, 23, 24) are flat and, in the position of use of the suspension spring (1), aligned parallel to a loading direction, **characterised in that** the segments (3, 4) are pivotable towards one another to their position of use along a bend line (8) formed by the connection web (7).

2. Elastomer suspension spring according to claim 1, **characterised in that** the division of the at least one region along the loading direction of the suspension spring (1) is provided in the position of use.

3. Elastomer suspension spring according to claim 1 or 2, **characterised in that** the contact surfaces (5, 6, 25, 26) of two adjacent segments (3, 4, 13, 14, 15, 23, 24) are designed perpendicular to the loading direction without undercuts.

4. Elastomer suspension spring according to any one of the preceding claims, **characterised in that** the segments (3, 4, 13, 14, 15, 23, 24) are designed in a materially homogenous manner.

5. Elastomer suspension spring according to any one of the preceding claims, **characterised in that** the segments (3, 4, 13, 14, 15) are designed in a column shape with uniform cross-sectional surface over their extension in the loading direction, wherein the column-shaped segments (3, 4, 13, 14, 15) have identical cross-sectional surfaces in shape and size for the symmetrical tension distribution.

6. Method of producing an elastomer suspension spring (1) according to any one of the preceding claims, wherein, during vulcanisation, a heat input into elastomer material of the elastomer suspension spring (1) takes place via at least one introductory surface located on its outer circumference and wherein during the vulcanisation to reduce a vulcanisation duration through a core region (21), whose side surfaces form additional heat surfaces (17), an additional heat input takes place via at least one contact surface (5, 6, 25, 26) of the elastomer suspension spring (1) which is arranged inwardly in its position of use, wherein the core region (21) is triangular in cross-section such that the two segments (3, 4) are vulcanised with one another in an angled position.

7. Method according to claim 6, wherein the suspension spring (1) is produced by a pressing, a transfer moulding or an injection moulding process, in the case of which the vulcanisation of the elastomer suspension spring (21) takes place under pressure and heat application in a mould (19).

8. Apparatus for producing an elastomer suspension spring (1) according to any one of claims 1 to 5 and/or to carry out the method according to any one of claims 6 to 7, wherein the apparatus has at least one heating surface (16) for introduction of heat into the elastomer suspension spring (1) via introductory surfaces on its outer circumference and wherein the apparatus for reducing a vulcanisation time has a core region (21), whose side surfaces form additional heating surfaces (17) which allow a heat input via at least one assigned contact surface (5, 6, 25, 26) of the elastomer suspension spring (1) which is arranged inwardly in its position of use, **characterised in that** the core region (21) is triangular in cross-section such that such that the two segments (3, 4) can be vulcanised with one another in an angled position.

9. Use of an elastomer suspension spring (1) according to any one of claims 1 to 5 in a unit mount (10) of a motor vehicle.

10. Use of an elastomer suspension spring (1) according to claim 9, **characterised in that** the unit mount (10) has at least one trough-shaped region (11) in which the elastomer suspension spring (11) can be received or is received in a positive-locking manner.

## Revendications

1. Ressort porteur en élastomère (1) pour la suspension d'amortissement des vibrations de composants d'un véhicule automobile, le ressort porteur en élastomère (1) comprenant au moins une partie constituée d'un matériau massif de type élastomère, qui est divisée en au moins deux segments (3, 4, 13, 14, 15, 23, 24), dont une pluralité sont reliés entre eux, au niveau de leur extrémité orientée vers une charge dans la position d'utilisation du ressort porteur (1), dans sa partie frontale, par l'intermédiaire d'au moins un élément de liaison (7), conçu comme une nervure de liaison, qui est réalisé d'une seule pièce avec les extrémités, reliées par celui-ci, des segments (3, 4, 13, 14, 15, 23, 24), deux segments (3, 4, 13, 14, 15, 23, 24) adjacents comprenant des surfaces de contact (5, 6, 25, 26) de formes complémentaires qui, dans la position d'utilisation du ressort porteur en élastomère (1), forment des surfaces internes de celui-ci et s'appuient l'une contre l'autre sur toute leur surfaces sans interstice et les surfaces de contact (5, 6, 25, 26) de segments (3, 4, 13, 14, 15, 23, 24) adjacents étant planes et étant, dans la position d'utilisation du ressort porteur (1), parallèles à une direction de sollicitation, **caractérisé en ce que** les segments (3, 4) peuvent, dans la position d'utilisation, pivoter les uns vers les autres le long d'une ligne de pliage (8) formée par la nervure de liaison (7).

2. Ressort porteur en élastomère (1) selon la revendication 1, **caractérisé en ce que** la division de l'au moins une partie le long de la direction de sollicitation du ressort porteur (1) est prévue dans la position d'utilisation.

3. Ressort porteur en élastomère (1) selon la revendication 1 ou 2, **caractérisé en ce que** les surfaces de contact (5, 6, 25, 26) de deux segments (3, 4, 13, 14, 15, 23, 24) adjacents sont perpendiculaires à la direction de sollicitation, sans contre-dépouille.

4. Ressort porteur en élastomère (1) selon l'une des revendications précédentes, **caractérisé en ce que** les segments (3, 4, 13, 14, 15, 23, 24) sont réalisés avec un matériau homogène.

5. Ressort porteur en élastomère (1) selon l'une des revendications précédentes, **caractérisé en ce que** les segments (3, 4, 13, 14, 15) sont conçus sous la forme de colonnes avec une section transversale régulière sur leur extension dans la direction de sollicitation, les segments en forme de colonnes (3, 4, 13, 14, 15) comprenant, pour la répartition symétrique des contraintes, des sections transversales de même forme et de même taille.

6. Procédé de fabrication d'un ressort porteur en élastomère (1) selon l'une des revendications précédentes, moyennant quoi, pendant une vulcanisation, un apport de chaleur dans le matériau élastomère du ressort porteur en élastomère (1) a lieu sur au moins une surface d'introduction se trouvant sur sa circonférence externe et moyennant quoi, pendant la vulcanisation, pour raccourcir la durée de la vulcanisation, à l'aide d'une partie de noyau (21), dont les surfaces latérales forment des surfaces de chauffage (17) supplémentaires, un apport de chaleur supplémentaire a lieu sur au moins une surface de contact (5, 6, 25, 26) du ressort porteur en élastomère (1), qui est disposée, dans sa position d'utilisation, à l'intérieur, la partie de noyau (21) présentant une section transversale de forme triangulaire, de façon à ce que les deux segments (3, 4) soient vulcanisés ensemble dans une position angulaire.

7. Procédé selon la revendication 6, le ressort porteur (1) étant fabriqué à l'aide d'un procédé de moulage sous pression, un procédé de moulage par transfert ou un procédé de moulage par injection, dans lequel la vulcanisation du ressort porteur en élastomère (1) a lieu sous pression et avec un apport de chaleur dans un moule (19).

8. Dispositif pour la fabrication d'un ressort porteur en élastomère (1) selon l'une des revendications 1 à 5 et/ou pour l'exécution du procédé selon l'une des revendications 6 à 7, le dispositif comprenant au moins une surface de chauffage (16) pour l'introduction de chaleur dans le ressort porteur en élastomère (1) par l'intermédiaire de surfaces d'introduction sur sa circonférence externe et le dispositif comprenant, pour le raccourcissement d'un temps de vulcanisation, une partie de noyau (21) dont les surfaces latérales forment des surfaces de chauffage supplémentaires (17), qui permettent un apport de chaleur sur au moins une surface de contact (5, 6, 25, 26) correspondante du ressort porteur en élastomère (1), qui est disposé, dans sa position d'utilisation, à l'intérieur, **caractérisé en ce que** la partie de noyau (21) présente une section transversale triangulaire, de façon à ce que les deux segments (3, 4) soient vulcanisés ensemble dans une position angulaire.

9. Utilisation d'un ressort porteur en élastomère (1) selon l'une des revendications 1 à 5 dans un palier d'agrégat (10) d'un véhicule automobile.

10. Utilisation d'un ressort porteur en élastomère (1) selon la revendication 9, **caractérisé en ce que** le palier d'agrégat (10) comprend au moins une partie en creux (11) dans laquelle le ressort porteur en élastomère (11) peut être logé ou est logé par complémentarité de forme.
